(11)  **EP 2 691 767 B1**

(12)  **EUROPEAN PATENT SPECIFICATION**

(45) Date of publication and mention
of the grant of the patent:
**23.03.2016 Bulletin 2016/12**

(21) Application number: **12765051.3**

(22) Date of filing: **29.03.2012**

(51) Int Cl.:
*G01N 30/50* (2006.01)       *B01D 15/20* (2006.01)
*B01D 15/34* (2006.01)       *G01N 30/14* (2006.01)
*B01D 15/38* (2006.01)       *B01J 20/28* (2006.01)
*B01J 20/32* (2006.01)       *G01N 1/40* (2006.01)
*B01J 20/285* (2006.01)

(86) International application number:
**PCT/SE2012/050342**

(87) International publication number:
**WO 2012/134381 (04.10.2012 Gazette 2012/40)**

(54) **METHOD FOR SAMPLE PREPARATION**

VERFAHREN ZUR PROBENPRÄPARATION

PROCÉDÉ POUR LA PRÉPARATION D'UN ÉCHANTILLON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.03.2011 SE 1150279**

(43) Date of publication of application:
**05.02.2014 Bulletin 2014/06**

(73) Proprietor: **GE Healthcare Bio-Sciences AB
75184 Uppsala (SE)**

(72) Inventors:
• **GLAD, Gunnar**
  **S-751 84 Uppsala (SE)**
• **JOHANSSON, Bo-Lennart**
  **S-751 84 Uppsala (SE)**
• **MALOISEL, Jean-Luc**
  **S-751 84 Uppsala (SE)**

(74) Representative: **Aldenbäck, Ulla Christina
GE Healthcare Bio-Sciences AB
Patent Department
Björkgatan 30
751 84 Uppsala (SE)**

(56) References cited:
**EP-A1- 1 764 152        WO-A1-2009/131526
WO-A1-2009/131526    US-A- 4 411 789**

US-A1- 2010 197 894    US-A1- 2010 298 548

• **T. BERGANDER ET AL: "High-Throughput
Process Development: Determination of
Dynamic Binding Capacity Using Microtiter Filter
Plates Filled with Chromatography Resin",
BIOTECHNOLOGY PROGRESS, vol. 24, no. 3, 6
June 2008 (2008-06-06), pages 632-639,
XP055132473, ISSN: 8756-7938, DOI:
10.1021/bp0704687**

• **TAN G. ET AL.: 'Retention behavior of proteins in
size-exclusion electrochromatography with a
low-voltage electric field perpendicular to the
liquid phase streamline' ELECTROPHORESIS
vol. 26, no. 16, 2005, pages 3084 - 3093,
XP055129329**

• **YUAN W. ET AL.: 'Protein adsoption-dependent
electro-kinetic pore flow: Modeling of
ion-exchange electrochromatography with an
oscillatory transverse electric field'
ELECTROPHORESIS vol. 31, no. 5, 2010, pages
944 - 951, XP055129381**

• **TÜZMEN N. ET AL.: 'Development of the magnetic
beads for dye ligand affinity chromatography and
application to magnetically stabilized fluidized
bed system' PROCESS BIOCHEMISTRY vol. 45,
no. 4, 2010, pages 556 - 562, XP026944004**

EP 2 691 767 B1

**Description**

**Field of the invention**

The present invention provides a method for sample preparation. More precisely the invention provides a method for depletion of undesired molecules and/or enrichment of desired molecules from samples, for example depletion of high abundant large proteins from low abundant smaller proteins/peptides, such as biomarkers. The invention also relates to a separation material comprising magnetic particles used in the method.

**Background of the invention**

High-throughput quantitative serum profiling methods are important approaches for discovery of biomarkers. Besides using proteomics to identify protein sequences, modern proteomics aim to search for novel methodologies having direct impact in clinical diagnosis, new drug designs, clinical trials and control of therapy. Regardless of study objectives, the proteomics approach has to contain sequential steps of workflow comprising sample preparation, quantitative analysis, data acquisition, database searches and final bioinformatics analysis.

Currently, the major objective of clinical proteomics utilizing body fluids is to reduce the dynamic range of proteins in analyzed samples. Initially, columns and cartridges for albumin and IgG were available [H.L. Huang, T. Stasyk, S. Morandell, M. Mogg, M. Schreiber, I. Feuerstein, C.W. Huck, G. Stecher, G.K. Bonn, L.A. Huber, Electrophoresis 26 (2005) 2843.] and they were soon followed by columns for multiple protein removal based on immunodepletion [R. Pieper, Q. Su, C.L. Gatlin, S.T. Huang, N.L. Anderson, S. Steiner, Proteomics 3 (2003) 422.]. Removal of most abundant proteins from serum/plasma is a standard first step in clinical proteomics analyses aiming at biomarker discovery. In most applications it is quite obvious that immunodepletion of the 12 most abundant proteins is necessary (i.e. serum albumin, IgG, fibrinogen, transferrin, IgA, IgM, haptoglobin, apo A-I, apo A-II, a1-antitrypsin, a1-acid glycoprotein, a2-macroglobulin). These proteins comprise over 96% of total protein content in plasma/serum.

However, immunodepletion of multiple proteins can be difficult to handle and can increase the risk of losing proteins of interest or low abundant-candidate biomarkers which may be removed along with those specifically depleted. Albumin is the most abundant protein in plasma and is a carrier of many proteins and other compounds (e.g., lipoproteins and amino acids). Thus, the removal of albumin may have a profound impact on the final quantitative effect of proteomics profiling. Consequently, other approaches have to be used. Regardless of how we attempt to reduce the complexity of the plasma/serum sample, there is no consensus on how many and which proteins or group of proteins that should be removed from these samples prior to proteomics profiling. As stated above, this is one of the significant problems awaiting a solution to make the discovery of clinical biomarkers more effective. Moreover, removal of highly-abundant proteins also applies to samples such as cell and tissue lysates. Furthermore, there is a need there is a need to address the concentration of low abundant biomarkers prior analysis.

Thus, there is a need for new methods for sample clean-up for all kinds of analysis of complex biological samples biological samples (e.g., serum, other body fluids, or tissues).

WO 2009/131526 A1 discloses a separation medium comprising shell beads comprising an inner porous core and an outer porous shell with a porosity equal or denser than that of the shell. D1 further discloses a breakthrough capacity test experiment involving lysozyme (MW=14,3 kDa) and IgG (MW=150 kDa) using such separation medium.

Summary of the invention

The present invention provides a method for sample preparation or clean-up. The method is performed without pre-treatment or removal of specific undesired proteins, such as albumin, in the sample and provides for sample concentration of desired molecules.

Specifically, the invention provides a method for depletion of undesired molecules and/or enrichment of desired molecules from a sample comprising high abundant as well as low abundant molecules, comprising the following steps: a) providing a separation material comprising a solid phase (beads) comprising an inner porous core material comprising magnetic particles and an outer porous shell with a porosity equal or denser than that of the shell; b) adding the sample to the separation material; c) adsorbing a first fraction of molecules with a molecular weight of 500-50 000 Da in the core and simultaneously excluding a second fraction of molecules from binding to the core and the shell, wherein the molecular weight of the second fraction molecules is at least 5 preferably 10 times higher than the molecular weight of the first fraction, and d) eluting the desired molecules from the separation material using a oscillating power/field over the separation material in step d). An oscillating power/field can also be used at the adsorption step (step c) to increase the mass transport into the core of the beads.

The first fraction of molecules are for example drugs with a mw of about 700 Da, small proteins/peptides with an mw of about 7000 Da or proteins with a mw of about 40 000 Da. The second fraction has at least a 5-10 times larger mw than the first fraction. Thus in case the first fraction is drugs with an mw of about 700 Da, then the second fraction is at least 3500-7000 Da, etc. The second fraction is also called the non-binding fraction.

The oscillating power/field is magnetic. The magnetic particles will oscillate resulting in increased mass transport. Alternatively, the oscillating power/field is ultrasonic. The use of an ultrasonic field will also increase mass transport.

Optionally, the method comprises retaining the excluded fraction in step d). This is the case when the excluded fraction is a desired fraction, such as the case when a large molecule is desired, for example a large molecule cleaned from toxic smaller substances which will be adsorbed in the core.

Preferably, the method comprises a step e) of eluting the first fraction of molecules from the core. This is the case when the smaller mw fraction is the desired fraction, for example when a small biomolecule like a biomarker is separated from contaminating larger mw molecules.

The inner core may be provided with one or more ligands selected from IEC (ion exchange chromatography), HIC (hydrophobic interaction), affinity, MM (multi modal), RPC (reversed phase chromatography), HILIC (hydrophilic liquid interaction chromatography), chelating ligands.

Also the shell may be provided with ligands. These ligands may be chosen from the same as in the core, see above, but different ligands will be used in the core and shell.

In one embodiment, a specific ligand, such as a salt tolerant ion exchange ligand will be used in the inner core.

In a further embodiment the separation medium comprises a combination of different magnetic shell media wherein each medium interacts with different sample substances at the adsorption step. The skilled person realises that many variations are possible as every separation media may contain three different separation principles.

The separation medium may also comprise a combination of magnetic shell media together with non-magnetic chromatographic material.

The sample may be body fluid, tissue, cells, or parts thereof.

In one embodiment, the first fraction molecules are desired molecules, such as oligonucleotides, RNA, proteins, peptides, hormones, steroids, drugs, metabolites and other organic molecules, and wherein the method is a positive selection method.

In a further embodiment, the first fraction molecules are undesired molecules, such as oligonucleotides, RNA, proteins, peptides, hormones, steroids, drugs, metabolites, toxic substances and other organic molecules, and wherein the method is a negative selection method.

The method may be performed in batch or column format. In case of batch format the magnetic shell beads may be moved with a robot (automatisation).

The invention enables working of several samples in parallel, such as in microtiter plates.

The invention uses shell beads comprising an inner porous core and an outer porous shell, wherein the inner core is provided with magnetic particles. The shell beads may be provided in disposable kits for different applications, such as drug screening, peptide analysis, proteomics, and diagnostics.

Since the method of separation according to the invention occurs under equilibrium conditions through selective solute-surface interactions the proteins/peptides must have sufficient time to diffuse in and out of the pores. To overcome pore-diffusion effects in this type of magnetic beads an oscillating magnetic field (or ultrasonic energy) is applied and in that way a convective flow is created in the pores. Consequently a more efficient extraction/separation can be accomplished than before.

The invention may be performed in batch-, column or microtiter format. When packed in columns very high flow separation will be possible. In microtiter format, enrichment times can be substantially shortened for "96 well "experiments.

**Brief** description of the drawings

Fig 1 shows an illustrative picture of magnetic shell beads (different porosity in the shell and the core of the beads), and

Fig 2 shows an illustrative picture of magnetic shell beads (the same porosity in the shell and the core of the beads).

**Detailed description of the invention**

The invention will now be more closely described in relation to some examples presented herein which are for illustrative purpose only, and should not be constructed to limit the invention as defined by the appended claims.

EXPERIMENTAL PART

Introduction

The invention describes the design and utilisation of polymer core beads with ligands and magnetite attached in the core of the beads. A new chromatographic format presenting unique properties due to the combination of magnetic separation methodology, size exclusion fractionation of a sample and the selectivity of the core binding ligand. The beads are aimed as capture of "small" molecules in complex biological samples (e.g., serum, other body fluids, or tissues). Small molecules can, for example, be proteins with a molecular weight less than 30 000 g/mol, peptides, steroids, drugs or metal ions. The beads are constructed to prevent large molecules (molecules larger than the molecules to be captured in the core of the beads) to diffuse into the core of the beads. This type of beads can be designed as depicted in Fig.

1 and 2. The advantage with using this type of beads is that pre-treatment of the sample can be reduced or omitted. For example, the main difficulty with the proteomic and medical diagnostic analysis of the human plasma proteome and other body fluids is the extreme concentration differences between the high-abundant proteins and the expected specific single biomarkers that constitute the potential treatment indicators and therapeutic monitoring targets. This type of shell beads offers also possibilities to concentrate low abundant proteins due to interaction with the ligands attached in the core of the beads.

General

Volumes of matrix refer to settled bed volume and weights of matrix given in gram refer to suction dry weight. For large scale reaction stirring is referring to a suspended, motor-driven stirrer since the use of magnet bar stirrer is prompt to damage the beads. Conventional methods were used for the analysis of the functionality and the determination of the degree of allylation, or the degree of ligand content on the beads.

**Example 1: Preparation of agarose magnetic shell media based on -$SO_3^-$ ligands in the core of the beads.**

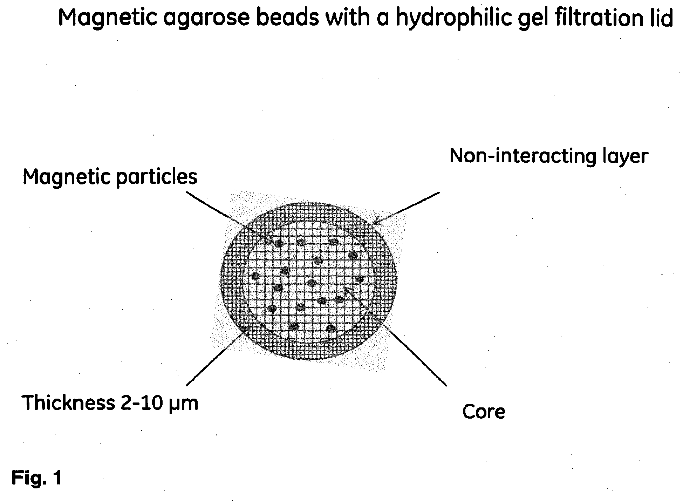

This example illustrates the synthesis of beads presented in Fig. 1.

Production of magnetic agarose beads

About 50 g of iron oxide particles (particle size 1.5 $\mu$m) were added to an agarose solution containing agarose (117 g) and water (500 g). The solution was adjusted to 95 °C. This solution was thereafter added to a solution of toluene (1420 ml) and ethyl cellulose (106 g) in a vessel equipped with a stirrer, while the temperature was kept at 75 °C. The stirrer speed was increased until desired particle size was obtained. The emulsion was thereafter cooled to room temperature. Beads were washed with ethanol and water.
To washed beads (500 mL) water (100 mL), $Na_2SO_4$ (74 g), 50 % NaOH (6 mL) and $NaBH_4$ (0.5 g) were added. The temperature was increased to 50°C and epichlorohydrine (61 mL) and sodium hydroxide (42 mL) were added. After the addition was completed the reaction was left over night at 50°C. The bead slurry was then cooled and neutralized with 60% acetic acid. Finally the gel was washed on a glass filter with distilled water. The diameter (D50v) of the beads was approximately 97 $\mu$m.

Allyl activation of the magnetic beads with allylglycidylether

40 mL of drained magnetic agarose beads were transferred to a reaction vessel and 4 mL of distilled water, 8 mL of 50% NaOH, 4.8 g of $Na_2SO_4$ were added. After ½h of stirring at 50°C, 12 ml of allylglycidylether (AGE) were added. The reaction slurry was well stirred at 50°C for 16h, followed by washings on a glass filter funnel with distilled water, ethanol and finally distilled water.
The allyl content, 285 $\mu$mol/mL, was measured by titration.

4 $\mu$m shell activation

20 g of drained magnetic agarose gel (corresponding to a total of 5.7 mmol allyl groups) and 2 g sodium acetate x3$H_2$O were powerfully stirred in 200 mL of distilled water. 0.25 equivalents of bromine (75 $\mu$l) was dissolved in 110 mL of distilled water in a well closed glass container. The bromine solution was added in 5 portions of approx 20 mL, in 20s intervals. After 5 minutes of stirring, the gel was washed on a glass filter with water.

Dextran coupling in the shell

12 g of Dextran AB were dissolved in 17 mL of distilled water by slow stirring at ambient temperature for 24h. 5 g of shell activated magnetic agarose beads were added to the dextran solution, and the solution was stirred at 50°C for 1h. While stirring, 1.3 mL of 50% NaOH and 0.2 g of $NaBH_4$ was added. The solution was stirred for 19h at 50°C and then washed on a glass filter with distilled water.

Core coupling of cation exchange ligand (-$SO_3^-$)

5 g of drained magnetic dextran shell coupled gel was stirred in 10 mL of distilled water and 0.5 g of sodium acetate. Bromine (saturated aqueous solution) was added until a persistent yellow colour was obtained, followed by destruction of excess bromine with sodium-formiate and washings with distilled water. Drained brominated gel (5 g) was mixed with a solution of 1.5 g of sodium sulfite in 5 mL of distilled water, pH was adjusted to 12 with 50% NaOH and then stirred at 50°C for 17h. The gel was then washed on a glass filter funnel with distilled water. By titration the $H^+$ capacity was estimated to 188 $\mu$mol/mL.

**Example 2: Preparation of dextran magnetic shell media based on -$SO_3^-$ ligands in the core of the beads.**

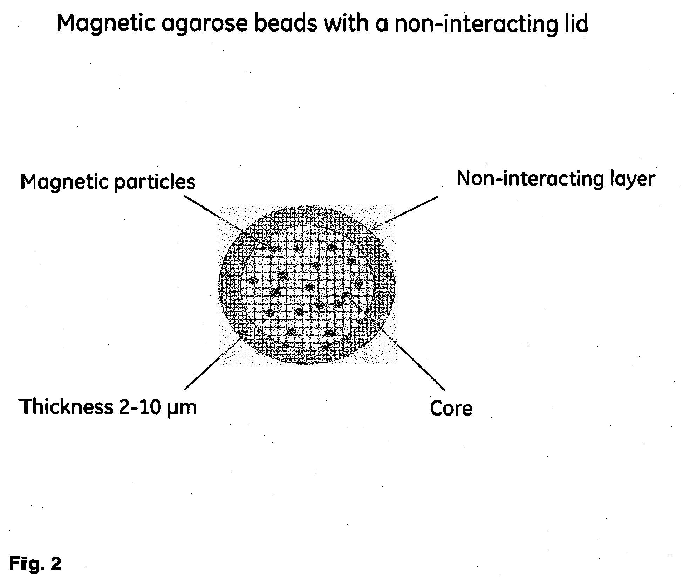

This example presents a synthesis procedure of beads as illustrated in Fig. 2. The synthesis is designed to obtain a bead with a porosity corresponding to Sephadex G-50 (fractionation range of 1500 to 30000 g/mol) but with iron oxide particles and ligands in the core of the beads.

Production of dextran magnetic beads with a porosity corresponding to Sephadex G-50

About 20 g of iron oxide particles (particle size 1,5 $\mu$m) were added to a dextran solution containing water (200 mL), 50% NaOH (13 ml), $NaBH_4$ (0.5 g) and Dextran TF (94 g). This solution was heated to 50°C and thereafter added to a solution of ethylene dichloride (200 mL) and cellulose acetate butyrate (12 g) in a vessel equipped with a blade stirrer. The stirrer speed was increased until desired particle size was obtained. Thereafter was epichlorohydrine (13 mL) added and the reaction continued at 50°C for 16 hours. The obtained beads were washed to remove emulsifiers and remaining chemicals.

Core coupling of cation exchange ligand ($-SO_3^-$)

5 g of drained magnetic dextran shell coupled gel was stirred in 10 mL of distilled water and 0.5 g of sodium acetate. Bromine (saturated aqueous solution) was added until a persisten yellow colour was obtained, followed by destruction of excess bromine with sodium-formiate and washings with distilled water. Drained brominated gel (5 g) was mixed with a solution of 1.5 g of sodium sulfite in 5 mL of distilled water, pH was adjusted to 12 with 50% NaOH and then stirred at 50°C for 17h. The gel was then washed on a glass filter funnel with distilled water.

**Example 3: Chromatographic evaluation of the prototype described in example 1.**

To prove that proteins with a molecular weight larger than about 10 000 g/mol are excluded from the magnetic beads produced according to example 1 the breakthrough capacities for a number of proteins have been tested. The prototype based on magnetic agarose beads (see example 1) were packed in a suitable column and a protein solution was pumped through the column. The mobile phase condition was adjusted to acidic pH to enable all proteins to adsorb to the core ligand ($-SO_3^-$).

The magnetic agarose shell medium to be investigated (Prototype produced in example 1) with respect to breakthrough capacity was packed in HR 5/2 columns and the sample solution was pumped at a flow rate of 0.2 mL/min through the column after equilibration with buffer solution. The breakthrough capacity was evaluated at 10% of the maximum UV detector signal (280 nm). The maximum UV signal was estimated by pumping the test solution directly into the detector. The breakthrough capacity at 10% of absorbance maximum ($Q_{b10\%}$) was calculated according to the formula:

$$Q_{b10\%} = (T_{R10\%} - T_{RD}) \times C \times F / V_c$$

where $T_{R10\%}$ is the retention time (min) at 10% of absorbance maximum, $T_{RD}$ the void volume time in the system (min), C the concentration of the sample (4 mg protein/mL), F the flow velocity (mL/min) and $V_C$ the column volume (mL). The adsorption buffer used at breakthrough capacity measurements was 50 mM acetic acid adjusted to pH 4.0.

Sample

The sample was lysozyme (4 mg/mL), bovine serum albumin (1 mg/mL) or IgG (1 mg/mL). The proteins were dissolved in 50 mM acetic acid buffer (pH 4.0).

Instrumental

    LC System: Äkta Explorer 10
    Software: Unicorn
    Column HR 5/2

Results

The breakthrough capacity for BSA (MW: ca 68 000) and IgG (MW: ca 150 000) was 0 mg/mL meaning that the proteins are not able to diffuse into the core of the beads and adsorb to the $-SO_3^-$ ligands. In case of the experiments with lysozyme low amounts (less than 1 mg/mL) were adsorbed to the beads. The results clearly show that this type of agarose magnetic shell beads exclude proteins larger than lysozyme (MW: ca 14 000 g/mol). The production process of this type of beads makes it very simple to vary the exclusion limit of the gel filtration lid by changing the amount of dextran attached to the lid and/or changing the size of the dextran used. Furthermore, the concentration of low abundant markers can easily be accomplished by increasing the extraction time.

**Claims**

1. A method for depletion of undesired molecules and/or enrichment of desired molecules from a sample comprising high abundant as well as low abundant molecules, comprising the following steps: a) providing a separation material comprising a solid phase (beads) comprising an inner porous core material comprising magnetic particles and an outer porous shell with a porosity equal or denser than that of the shell; b) adding the sample to the separation material; c) adsorbing a first fraction of molecules with a molecular weight of 500-50 000 Da in the core and simultaneously excluding a second fraction of molecules from binding to the core and the shell, wherein the molecular weight of the second fraction molecules is at least 5 preferably 10 times higher than the molecular weight of the first fraction and d) eluting the desired molecules from the separation material, wherein step d) and optionally step c) is performed using an oscillating power/field applied over the separation material.

2. Method according to claim 1, wherein the oscillating power/field is magnetic.

3. Method according to claim 1, wherein the oscillating power/field is ultrasonic.

4. Method according to claim 1, 2 or 3, comprising retaining the excluded fraction in step d).

5. Method according to one or more of the above claims, comprising a step e) eluting the first fraction of molecules from the core.

6. Method according to one or more of the above claims, wherein the inner core is provided with one or more ligands selected from IEC (ion exchange chromatography), HIC (hydrophobic interaction), affinity, MM (multi modal), RPC (reversed phase chromatography), HILIC (hydrophilic liquid interaction chromatography), chelating ligands.

7. Method according to one or more of the above claims, wherein the shell is provided with ligands.

8. Method according to claim 7, with a specific ligand in the inner core (salt tolerant ion exchange ligand).

9. Method according to one or more of the above claims, wherein the sample is body fluid, tissue, cells, or parts thereof.

10. Method according to one or more of the above claims, wherein the first fraction molecules are desired molecules, such as oligonucleotides, RNA, proteins, peptides, hormones, steroids, drugs, metabolites and other organic molecules, and wherein the method is a positive selection method.

11. Method according to one or more of the above claims 1-9, wherein the first fraction molecules are undesired molecules, such as oligonucleotides, RNA, proteins, peptides, hormones, steroids, drugs, metabolites, toxic substances and other organic molecules, and wherein the method is a negative selection method.

12. Method according to one or more of the above claims, which is performed in batch or column format.

13. Method according to claim 12, wherein in case of batch format the magnetic shell beads are moved with a robot (automatisation).

14. Method according to one or more of the above claims, wherein several samples are worked in parallel, such as in microtiter plates.

**Patentansprüche**

1. Verfahren zur Verringerung von unerwünschten Molekülen und/oder Anreicherung von gewünschten Molekülen aus einer Probe umfassend reichlich vorhandene und in geringem Maße vorhandene Moleküle, umfassend die folgenden Schritte: a) zur Verfügung Stellung eines Trennmaterials umfassend eine feste Phase (Kügelchen) umfassend ein inneres poröses Kernmaterial umfassend magnetische Partikel und eine äußere poröse Muschelhülle mit einer Porosität, die derjenigen der Muschel entspricht oder härter als diese ist; b) Hinzufügen der Probe zum Trennmaterial; c) Adsorbieren einer ersten Fraktion von Molekülen mit einem Molekulargewicht von 500-50 000 Da im Kern und gleichzeitiges Ausschließen einer zweiten Fraktion von Molekülen vom Binden an den Kern und die Hülle, wobei das Molekulargewicht der Moleküle der zweiten Fraktion wenigstens 5 bevorzugt 10 Mal höher als das Molekulargewicht der ersten Fraktion ist, und d) Eluieren der gewünschten Moleküle von dem Trennmaterial, wobei schritt d) und optional Schritt c) unter Verwendung einer oszillierenden Kraft/eines oszillierenden Feldes, das über dem Trennmaterial angewendet wird, durchgeführt wird.

2. Verfahren nach Anspruch 1, wobei die oszillierende Kraft/das oszillierende Feld magnetisch ist.

3. Verfahren nach Anspruch 1, wobei die oszillierende Kraft/das oszillierende Feld Ultraschall ist.

4. Verfahren nach Anspruch 1, 2 oder 3, umfassend das Zurückhalten der ausgeschlossenen Fraktion in Schritt d).

5. Verfahren nach einem oder mehreren der obenstehenden Ansprüche, umfassend einen Schritt e) des Eluierens der ersten Fraktion von Molekülen von dem Kern.

6. Verfahren nach einem oder mehreren der obenstehenden Ansprüche, wobei der innere Kern mit einem oder mehreren Liganden zur Verfügung gestellt ist, ausgewählt aus IEC (Ionenaustauschchromatographie), HIC (hydrophobe Wechselwirkung), Affinität, MM (Multimodal), RPC (Umkehrphasenchromatographie), HILIC (hydrophile Flüssigkeitsinteraktionschromatographie), Chelatliganden.

7. Verfahren nach einem oder mehreren der obenstehenden Ansprüche, wobei die Hülle mit Liganden zur Verfügung gestellt ist.

8. Verfahren nach Anspruch 7, mit einem spezifischen Liganden im inneren Kern (salztoleranter Ionenaustauschligand).

9. Verfahren nach einem oder mehreren der obenstehenden Ansprüche, wobei die Probe Körperflüssigkeit, Gewebe, Zellen oder Teile davon ist.

10. Verfahren nach einem oder mehreren der obenstehenden Ansprüche, wobei die Moleküle der ersten Fraktion gewünschte Moleküle sind, wie zum Beispiel Oligonukleotide, RNA, Proteine, Peptide, Hormone, Steroide, Arzneimittel, Metabolite und andere organische Moleküle, und wobei das Verfahren ein Positivselektionsverfahren ist.

11. Verfahren nach einem oder mehreren der obenstehenden Ansprüche 1-9, wobei die Moleküle der ersten Fraktion unerwünschte Moleküle sind, wie zum Beispiel Oligonukleotide, RNA, Proteine, Peptide, Hormone, Steroide, Arzneimittel, Metabolite, toxische Substanzen und andere organische Moleküle, und wobei das Verfahren ein Negativselektionsverfahren ist.

12. Verfahren nach einem oder mehreren der obenstehenden Ansprüche, das in Batch- oder Säulenformat durchgeführt wird.

13. Verfahren nach Anspruch 12, wobei im Falle vom Batchformat die magnetischen Muschelkügelchen mit einem Roboter bewegt werden (Automatisierung).

14. Verfahren nach einem oder mehreren der obenstehenden Ansprüche, wobei mehrere Proben parallel bearbeitet werden, wie zum Beispiel in Mikrotiterplatten.

**Revendications**

1. Procédé d'appauvrissement en molécules non souhaitées et/ou d'enrichissement en molécules souhaitées dans un échantillon comprenant des molécules très abondantes ainsi que des molécules peu abondantes, comprenant les étapes consistant à : a) fournir un matériau de séparation comprenant une phase solide (billes) comprenant un matériau de noyau interne poreux comprenant des particules magnétiques et une enveloppe poreuse externe, avec une porosité égale ou plus dense que celle de l'enveloppe ; b) ajouter l'échantillon au matériau de séparation ; c) adsorber une première fraction de molécules ayant un poids moléculaire de 500 à 50 000 Da dans le noyau et exclure simultanément une seconde fraction de molécules d'une liaison avec le noyau et l'enveloppe, dans lequel le poids moléculaire des molécules de la seconde fraction est au moins 5 fois, de préférence 10 fois plus élevée que le poids moléculaire de la première fraction et d) éluer les molécules souhaitées du matériau de séparation, dans lequel l'étape d) et éventuellement l'étape c) sont effectuées en utilisant un pouvoir/champ oscillant appliqué sur le matériau de séparation.

2. Procédé selon la revendication 1, dans lequel le pouvoir/champ oscillant est magnétique.

3. Procédé selon la revendication 1, dans lequel le pouvoir/champ oscillant est ultrasonique.

4. Procédé selon la revendication 1, 2 ou 3, comprenant la retenue de la fraction exclue à l'étape d).

5. Procédé selon une ou plusieurs des revendications précédentes, comprenant une étape e) d'élution de la première fraction de molécules du noyau.

6. Procédé selon une ou plusieurs des revendications précédentes, dans lequel l'âme interne est pourvue d'un ou plus de ligands choisis parmi les ligands chélatants en IEC (chromatographie par échange ionique), en HIC (interaction hydrophobe), par affinité, en MM (multimodaux), en EPC (chromatographie à phase inverse) et en HILIC (chromatographie par interaction de liquide hydrophile).

7. Procédé selon une ou plusieurs des revendications précédentes, dans lequel l'enveloppe est pourvue de ligands.

8. Procédé selon la revendication 7 avec un ligand spécifique dans le noyau interne (ligand à échange ionique tolérant aux sels).

9. Procédé selon une ou plusieurs des revendications précédentes, dans lequel l'échantillon est un fluide corporel, un tissu, des cellules ou des parties de ceux-ci.

10. Procédé selon une ou plusieurs des revendications précédentes, dans lequel les molécules de la première fraction sont des molécules souhaitées, telles que des oligonucléotides, de l'ARN, des protéines, des peptides, des hormones, des stéroïdes, des médicaments, des métabolites et d'autres molécules organiques et dans lequel le procédé est un procédé de sélection positif.

11. Procédé selon une ou plusieurs des revendications précédentes 1 à 9, dans lequel les molécules de la première fraction sont des molécules non souhaitées, telles que des oligonucléotides, de l'ARN, des protéines, des peptides, des hormones, des stéroïdes, des médicaments, des métabolites, des substances toxiques et d'autres molécules organiques et dans lequel le procédé est un procédé de sélection négatif.

**12.** Procédé selon une ou plusieurs des revendications précédentes, qui est effectué en format discontinu ou format de colonne.

**13.** Procédé selon la revendication 12, dans lequel, dans le cas d'un format discontinu, les billes magnétiques de l'enveloppe sont déplacées avec un robot (automatisation).

**14.** Procédé selon une ou plusieurs des revendications précédentes, dans lequel plusieurs échantillons sont traités en parallèle, notamment dans des plaques de microtitrage.

Magnetic agarose beads with a hydrophilic gel filtration lid

Magnetic particles

Non-interacting layer

Thickness 2-10 μm

Core

**Fig. 1**

Magnetic agarose beads with a non-interacting lid

**Fig. 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009131526 A1

**Non-patent literature cited in the description**

- **H.L. HUANG ; T. STASYK ; S. MORANDELL ; M. MOGG ; M. SCHREIBER ; I. FEUERSTEIN ; C.W. HUCK ; G. STECHER ; G.K. BONN ; L.A. HUBER.** *Electrophoresis,* 2005, vol. 26, 2843

- **R. PIEPER ; Q. SU ; C.L. GATLIN ; S.T. HUANG ; N.L. ANDERSON ; S. STEINER.** *Proteomics,* 2003, vol. 3, 422